# EUROPEAN PATENT SPECIFICATION

(11) **EP 1 082 910 B1**
(45) Date of publication and mention of the grant of the patent: **28.07.2004**
(21) Application number: 99118148.8
(22) Date of filing: 11.09.1999
(51) Int. Cl.: A23L 1/18

(54) **Process for obtaining a cooked, extruded and expanded cereal product**
Verfahren zur herstellung einem kochextrudierten, expandierten Getreideprodukt
Procédé d'obtention d'un produit céréalier cuit, extrudé et expansé

(43) Date of publication of application: 14.03.2001
(73) Proprietor: Société des Produits Nestlé S.A., 1800 Vevey (CH)
(72) Inventor: Dupart, Pierre, 8053 Zürich/Witikon (CH); Blasius, Leonhard, 78250 Tengen (DE); Bloechlinger, Kurt, 8310 Kemptthal ZH (CH)
(74) Representative: Thomas, Alain

(56) References cited:
- WO-A-95/04475
- DE-A- 4 438 599
- FR-A- 2 067 991
- GB-A- 2 176 089
- US-A- 3 653 916
- US-A- 4 568 550

## Description

The present invention relates to a process for manufacturing a savoury cereal.

EP0662788 (SOCIETE DES PRODUITS NESTLE S.A) discloses a process for preparing croutons which can float on the surface of a hot soup, which comprises cooking-extruding-expanding a mixture of a amylaceous powdery material, a fat and a filler so as to obtain a moisture content at the outlet from the extruder of 10-16% by weight and a total fat content of 6-14% by weight of the dry mixture.

An object of the present invention is to provide a process for manufacturing a savoury cereal.

The present process for manufacturing a savoury cereal consists of cooking-extruding-expanding at from 50 to 160°C, preferably at from 80 to 140°C, under from 50 to 160 bar for 5 to 50 s up to a gelatinisation degree of more than 25%, preferably of from 50 to 90%, a mixture comprising, in % by weight of the savoury cereal, from 40 to 80% of corn and/or wheat semolina or flour, from 3 to 8% of oat flour, from 5 to 40% of other amylaceous powdery material and/or vegetable powder, from 2 to 9% of oil or fat, from 1 to 5% of milk solid non fat, from 2 to 8% of sugar, up to 2% of salt and/or up to 5% of spices, and added water up to a water content of from 9 to 25%, thus obtaining a rope of a cooked-extruded-expanded mass having a water content of from 7 to 9.1% cutting the rope into pieces and drying them.

It has surprisingly been found that the objects of the present invention are achieved in the best way with the present savoury cereal which rehydrate correctly without loosing its crispiness when it is mixed with eggs and cooked in a pan for preparing an egg based product, especially an omelet or scrambled eggs, for example.

The present savoury cereal thus comprises, in % by weight, from 40 to 80% of corn and/or wheat semolina or flour, from 3 to 8% of oat flour, from 5 to 40% parts of other amylaceous powdery material or vegetable powder, from 2 to 9% of oil or fat, from 1 to 5% of milk solid non fat, from 2 to 8% of sugar, up to 2% of salt and/or up to 5% of spices.

The other amylaceous powdery material and/or vegetable powder may be a flour or semolina or even a native starch of a cereal or mixture of cereals such as barley, rice and rye, and/or a garlick, onion or leek powder, for example.

The oil or fat may be vegetable oil or fat or butter oil, which may act as a lubricating agent in the cooking-extrusion process.

The milk solid non fat may be powdered skimmed milk, for example.

The sugar may be saccharose and/or dextrose, for example.

For carrying out the present process for manufacturing a savoury cereal, a mixture having the composition indicated above may be prepared by first mixing together powdery components to obtain a dry mix and then mixing together the dry mix and liquid or fluid components in a first mixing section of an extruder, for example.

The mixture especially comprises added water up to a water content of from 9 to 25%. Such a water content is adequate for obtaining an adequate expansion degree of the present savoury product of from about 2 to 4 after cooking-extruding the mixture, such a relatively low expansion degree being adequate for obtaining the requested specific weight of from 100 to 500 g/l, preferably of from 150 to 350 g/l.

Cooking the mixture may then be carried out in subsequent sections of the extruder where the mixture is heated, compressed and sheared so that it forms a cooked thermo plastic mass.

The thermo plastic mass may be extruded by having it pushed by an extruder screw or twin screw through the openings of a die provided for at an end of the extruder. The thermo plastic mass may be expanded by extruding it through the die into an open space at ambiant temperature and at atmospheric pressure.

For carrying out these cooking-extruding-expanding steps, any traditional food extruder may be used, while a twin screw extruder is preferred.

Preferably, a rather big screw length of from about 800 to about 1500 mm or more is chosen in order to provide an adequate residence time of from about 5 to 50 s, for example.

Preferably, from four to possibly about six barrel heating zones are provided for.

In a first zone, the screw configuration may be such (relatively large screw pitch) that the components of the mixture are simply mixed together and transported into the next zone.

In further zones, namely in from a second to possibly a fourth zone, the screw configuration may be such (relatively large screw pitch) that the mixture is simultaneously transported and heated. The barrel heating may be set within a temperature range of from about 50 to 80°C for a second zone and it may be set within a range of from about 50 to 160°C, preferably of from 80 to 140°C, for a third zone and possibly a fourth zone, for example.

In intermediate zones, namely in from a fourth or possibly from a fifth to a sixth or a seventh zone, the screw configuration may be such (relatively short screw pitch) that the heated mixture is cooled and kneaded. The barrel heating may be set within a temperature range of from about 60 to 80°C for these intermediate zones, for example.

In a last zone, the screw configuration may be such (relatively short screw pitch) that the firstly heated and then kneaded mixture is further kneaded and compressed in order to be pushed through the openings of a die provided for after the end of the screw or twin screw, and the barrel heating may be set within a temperature range of from about 60 to 80°C, for example.

The screw configuration in a short segment in the middle of the screw may also comprise compressing elements, for example.

The die may have one or more circular openings of from 2 to 5 mm in diameter, for example. The die openings may also have different, fancy shapes such as star or comb, for example.

The present savoury cereal preferably has a rather large and attractive shape such as a cube, star or shell, for example.

The present savoury cereal may be partly or totally coated with a water barrier coating consisting of oil (deep frying), for example.

The present savoury cereal may be added alone or as part of a fix to eggs for preparing an egg based product, especially an omelet or scrambled eggs, for example.

In addition to the present savoury cereal, the fix may comprise a flavour mix such as cheese and mushroom or tomato and corn, or a vegetable garnish such as freeze dried leek, mushroom or corn, for example.

The present savoury cereal may be conditioned, alone or as part of a fix, in a packing providing for its protection against humidity, such as a packing made of a film with aluminium foil, for example.

The following examples are given as illustration of embodiments of the savoury cereal and embodiments of the process for its manufacture according to the present invention. The parts and percentages are by weight.

### Example 1

For manufacturing a savoury cereal having a shell shape which is to be added alone or as part of a fix to fresh eggs for preparing an egg based product, especially an omelet or scrambled eggs, a mixture was prepared which had the following composition, in % of the mixture (without added water):

| | |
|---|---|
| corn semolina | 75.0 |
| wheat flour | 3.1 |
| oat flour | 3.1 |
| skimmed milk powder | 2.0 |
| yeast extract | 1.0 |
| salt | 0.5 |
| whet gluten | 2.5 |
| saccharose | 5.9 |
| sodium glutamate | 0.5 |
| oil | 6.4 |
| Added water, up to a water content of the mixture of | 12% |

For preparing the mixture, the powders were first mixed together to obtain a dry mix.

The dry mix, oil and added water were then mixed together in a first zone of a BC-45 type CLEXTRAL twin screw extruder.

This extruder had a screw diameter of 55.5 mm, a total processing length of 1200 mm, 6 barrel heating zones and a die made of a thick metal plate in which two comb shaped holes were bored defining two comb shaped openings of 6.3 mm in length and 1.25 mm in width having rounded indentations (6 per comb) of 0.8 mm in thickness and 0.4 mm in height.

All the screw elements were double flight. The screw speed was set to 230 rpm.

In a first zone of 200 mm in length, the screw pitch was of 50 mm in length and the components of the mixture were simply mixed together at room temperature and transported to the next zone.

In a second zone of 200 mm in length, the screw pitch was of 50 mm, the barrel heating was set to a temperature of 60°C and the mixture was simultaneously heated up and transported.

In a third zone of 150 mm in length, the screw pitch was of 25 mm, the barrel heating was set to a temperature of 110°C, and the mixture was simultaneously further heated up, transported and kneaded.

In a fourth zone of 200 mm in length, the screw pitch was of 50 mm, the barrel heating was set to a temperature of 110°C, and the mixture was simultaneously further heated up and transported.

In a fifth and a sixth zone of respectively 100 and 300 mm in length, the screw pitch was of 32 mm and the plastified mass or mixture was cooled down while being simultaneously transported and kneaded under a pressure of about 136 bar, the barrel heatings being both set to a temperature of 75°C.

The screw configuration comprised compressing elements along a short segment of 50 mm in length between the third and the fourth zone.

At the end of the sixth zone the hot plastic mass was compressed to about 160 bar and pushed through the die whereby its temperature went up to 100°C. The mass was extruded into a free open space at atmospheric pressure and ambient temperature where it expanded to a degree of about 3.

The rope of cooked-extruded-expanded mass had a moisture content of 9.1%. It was cut into cubes of about 8 mm in side length which were dried in hot air down to a residual moisture content of 2.8%. Their degree of gelatinisation was of 88%.

The shell shaped savoury cereal thus obtained had a specific weight of 180 g/l and a very fine, porous, crispy texture. It reconstituted quickly and kept its crispy texture after having been mixed for 30 sec with fresh eggs (at a rate of 30 g cereal per two eggs) and after having then been cooked/fried in a pan for 2.5 min.

### Example 2

For manufacturing a savoury cereal having a cube shape which is to be added alone or as part of a fix to fresh eggs for preparing an egg based product, especially an omelet or scrambled eggs, a mixture was prepared which had the following composition, in % of the mixture (without added water) :

| | |
|---|---|
| corn semolina | 63.8 |
| oat flour | 6.3 |
| skimmed milk powder | 2.9 |
| yeast extract | 1.0 |
| salt | 0.6 |
| saccharose | 4.0 |
| sodium glutamate | 0.5 |
| roasted onion powder | 5.0 |
| onion powder | 9.8 |
| wheat bran | 3.9 |
| oil | 2.2 |
| Added water, up to a water content of the mixture of | 14.6% |

For preparing the mixture, the powders were first mixed together to obtain a dry mix.

The dry mix, oil and added water were then mixed together in a first zone of a BC-45 type CLEXTRAL twin screw extruder.

This extruder had a screw diameter of 55.5 mm, a total processing length of 1200 mm, 6 barrel heating zones and a die made of a thick metal plate in which one somewhat star shaped square hole was bored defining a generally square opening of 4 mm in side length, whereby each side was slighty incurved insindly.

All the screw elements were double flight. The screw speed was set to 300 rpm.

In a first zone of 200 mm in length, the screw pitch was of 50 mm in length and the components of the mixture were simply mixed together at room temperature and transported to the next zone.

In a second zone of 200 mm in length, the screw pitch was of 50 mm, the barrel heating was set to a temperature of 50°C and the mixture was simultaneously heated up and transported.

In a third zone of 150 mm in length, the screw pitch was of 25 mm, the barrel heating was set to a temperature of 110°C, and the mixture was simultaneously further heated up, transported and kneaded.

In a fourth zone of 200 mm in length, the screw pitch was of 50 mm, the barrel heating was set to a temperature of 110°C, and the mixture was simultaneously further heated up and transported.

In a fifth and a sixth zone of respectively 100 and 300 mm in length, the screw pitch was of 32 mm and the plastified mass or mixture was cooled down while being simultaneously transported and kneaded under a pressure of about 96 bar, the barrel heatings being set to respective temperatures of 70 and 60°C.

The screw configuration comprised compressing elements along a short segment of 50 mm in length between the third and the fourth zone.

At the end of the sixth zone the hot plastic mass was compressed to about 108 bar and pushed through the die whereby its temperature went up to 104°C. The mass was extruded into a free open space at atmospheric pressure and ambient temperature where it expanded to a degree of about 2.

The rope of cooked-extruded-expanded mass had a moisture content of 8%. It was cut into cubes of about 8 mm in side length which were dried in hot air down to a residual moisture content of 2%. Their degree of gelatinisation was 51%.

The cube shaped savoury cereal thus obtained had a specific weight of 292 g/l and a very fine, porous, crispy texture. It reconstituted quickly and kept its crispy texture after having been mixed for 30 sec with fresh eggs (at a rate of 20 g cereal per two eggs) and after having then been cooked/fried in a pan for 2.5 min.

### Example 3

A fix for omelet was prepared which comprised per portion:
30 g of shell shaped cereal obtained in Example 1
15 g of a cheese and mushroom flavour mix
1 g freeze dried leek
1 g freeze dried mushroom

A premix was prepared comprising all the ingredients.

A portion was prepared by pouring the premix into a bowl.

2 fresh eggs were added .

The preparation was manually mixed with a fork for about 30 sec.

A pan was heated up with some oil (about 5 to 10 g per portion).

The preparation was poured into the pan and cooked/fried for 2 to 3 min.

The shell shaped cereal reconstituted quickly and kept its crispy texture within the mushroom aromatised omelet.

### Example 4

A fix for omelet was prepared which comprised per portion:
20 g of cube shaped cereal obtained in Example 2
10 g of a tomato and corn flavour mix
3 g freeze dried corn

A premix was prepared comprising all the ingredients.

A portion was prepared by pouring the premix into a bowl.

2 fresh eggs were added .

The preparation was manually mixed with a fork for about 30 sec.

A pan was heated up with some oil (about 5 to 10 g per portion).

The preparation was poured into the pan and cooked/fried for 2 to 3 min.

The cube shaped cereal reconstituted quickly and kept its crispy texture within the tomato aromatised omelet.

## Claims

1. A process for manufacturing a savoury cereal consisting of cooking-extruding-expanding at from 50 to 160°C, preferably at from 80 to 140°C, under from 50 to 160 bar for 5 to 50 s up to a gelatinisation degree of more than 25%, preferably of from 50 to 90%, a mixture comprising, in % by weight of the savoury cereal, from 40 to 80% of corn and/or wheat semolina or flour, from 3 to 8% of oat flour, from 5 to 40% parts of other amylaceous powdery material and/or vegetable powder, from 2 to 9% of oil or fat, from 1 to 5% of milk solid non fat, from 2 to 8% of sugar, up to 2% of salt and/or up to 5% of spices, and added water up to a water content of from 9 to 25% thus obtaining a rope of a cooked-extruded-expanded mass having a water content of from 7 to 9.1% cutting the rope into pieces and drying them.

2. A process as claimed in claim 1, in which the mixture is cooked-extruded-expanded to an expansion degree of from 2 to 4.

3. A process as claimed in claim 1, which further comprises coating the cut pieces with oil.

## Revendications

1. Procédé de fabrication d'une céréale ayant un goût salé, consistant à cuire-extruder-expanser, à 50 à 160°C, de préférence de 80 à 140°C, à une pression de 50 à 160 bars, pendant 5 à 50 secondes, jusqu'à un degré de gélatinisation de plus de 25 %, de préférence de 50 à 90 %, un mélange comprenant, en % en poids de la céréale salée, de 40 à 80 % de semoule ou de farine de maïs et/ou de blé, de 3 à 8 % de farine d'avoine, de 5 à 40 % de parties d'une autre matière pulvérulente amylacée et/ou d'une poudre de légume, de 2 à 9 % d'huile ou de graisse, de 1 à 5 % d'un extrait sec dégraissé de lait, de 2 à 8 % de sucre, jusqu'à 2 % de sel et/ou jusqu'à 5 % d'épices, et de l'eau ajoutée jusqu'à une teneur en eau de 9 à 25 %, obtenant ainsi un cordon d'une masse cuite-extrudée-expansée ayant une teneur en eau de 7 à 9,1 %, à découper le cordon en morceaux et à sécher ceux-ci.

2. Procédé selon la revendication 1, dans lequel le mélange est cuit-extrudé-expansé jusqu'à un degré d'expansion de 2 à 4.

3. Procédé selon la revendication 1, comprenant, en outre, l'enrobage des morceaux découpés avec une huile.

## Patentansprüche

1. Verfahren zur Herstellung einer würzigen Cerealie, das darin besteht, daß man bei von 50 bis 160°C, vorzugsweise bei von 80 bis 140°C, unter von 50 bis 160 bar für 5 bis 50 s bis zu einem Verkleisterungsgrad von mehr als 25%, vorzugsweise von 50 bis 90%, eine Mischung kochextrudiert/expandiert, die, in Gew.-% der würzigen Cerealie, von 40 bis 80% Mais- und/oder Weizengrieß oder -mehl, von 3 bis 8% Hafermehl, von 5 bis 40% eines anderen stärkehaltigen pulverförmigen Materials und/oder eines Gemüsepulvers, von 2 bis 9% Öl oder Fett, von 1 bis 5% Nicht-Fett-Milchfeststoffe, von 2 bis 8% Zucker, bis zu 2% Salz und/oder bis zu 5% Gewürze sowie zugesetztes Wasser bis zu einem Wassergehalt von 9 bis 25% umfaßt, auf welche Weise ein Strang einer kochextrudierten/expandierten Masse mit einem Wassergehalt von 7 bis 9,1% erhalten wird, den Strang in Stücke schneidet und diese trocknet.

2. Verfahren nach Anspruch 1, bei dem die Mischung bis zu einem Expansionsgrad von 2 bis 4 kochextrudiert/expandiert wird.

3. Verfahren nach Anspruch 1, das außerdem das Überziehen der geschnittenen Stücke mit Öl umfaßt.
